# FASCICULE DE BREVET EUROPEEN

(11) **EP 2 446 402 B1**
(45) Date de publication et mention de la délivrance du brevet: **22.05.2013**
(21) Numéro de dépôt: 11787728.2
(22) Date de dépôt: 20.10.2011
(51) Int. Cl.: G06K 19/077, G06K 19/07, G09F 3/10

(54) **MATRICE D'ETIQUETTES D'IDENTIFICATION RFID ADHESIVES.**
MATRIX MIT KLEBE-RFID-IDENTIFIKATIONSETIKETTEN
MATRIX WITH ADHESIVE RFID-IDENTIFICATION LABELS

(30) Priorité: 22.10.2010 FR 1058698
(43) Date de publication de la demande: 02.05.2012
(73) Titulaire: IER, 92150 Suresnes (FR)
(72) Inventeur: GENTELET, Franck, 78280 Gyancourt (FR); BOUVERESSE, Jean-Clément, 95110 Sannois (FR); LE NEVEZ, Yves, 78000 Versailles (FR)
(74) Mandataire: Akdogan, Nurhak
(86) Numéro de dépôt international: PCT/FR2011/052457
(87) Numéro de publication internationale: WO 2012/025700

(56) Documents cités:
- EP-A1- 1 845 483
- DE-C1- 19 850 353

## Description

La présente invention concerne une étiquette d'identification RFID adhésive. Elle concerne également une matrice d'étiquettes comprenant de telles étiquettes adhésives.

Le domaine de l'invention est l'identification RFID (Radio Frequency Identification), et plus particulièrement des étiquettes RFID utilisées pour associer un identifiant à un objet portant l'étiquette.

De nos jours les étiquettes RFID sont utilisées couramment pour l'identification, le suivi et la gestion d'objets. Les systèmes utilisant la technologie RFID permettent une gestion automatisée et plus rapide d'objets dans de nombreux domaines.

De telles étiquettes RFID se présentent sous différentes formes et plus particulièrement sous forme adhésive. L'étiquette RFID adhésive est collée sur une paroi de l'objet à identifier grâce à un agent adhésif.

Une étiquette RFID est en générale composée d'une antenne et d'une puce couplée à cette antenne. Une ou plusieurs données d'identification sont enregistrées dans des moyens de mémorisation se trouvant dans la puce.

Lorsqu'elle se présente sous une forme adhésive, l'étiquette RFID comporte une couche, dite d'identification, constituée de l'antenne RFID et de la puce. Un agent adhésif est appliqué sur la couche d'identification et est destiné à réaliser une liaison adhésive entre la couche d'identification et la paroi d'un objet à identifier. Cet agent adhésif est caché par une couche, dite dorsale dans la présente demande, qu'il est nécessaire d'enlever, avant d'appliquer l'étiquette sur la paroi de l'objet à identifier. La dépose de l'étiquette RFID se fait par l'intermédiaire d'une couche, dite de transfert dans la présente demande, se trouvant du côté opposé à la couche dorsale par rapport à la couche d'identification. La couche de transfert et la couche d'identification sont collées l'une à l'autre.

La dépose de l'étiquette RFID sur la paroi de l'objet se fait de la manière suivante. La couche dorsale est enlevée. La couche d'identification est collée sur la paroi de l'objet grâce à la couche de transfert. Une fois que la couche d'identification est collée sur la paroi de l'objet, la couche de transfert est décollée de la couche d'identification.

Cependant, ces étiquettes RFID adhésives présentent des inconvénients. En effet, le décollage de la couche de transfert s'accompagne souvent d'une dégradation de la couche d'identification, et plus particulièrement de l'antenne et/ou de la puce.

Par ailleurs, dans certaines étiquettes RFID adhésives, la couche d'identification peut également comporter des données imprimées sur la couche d'identification, telle que l'étiquette RFID adhésive décrite dans le document US 6,163,260. Dans ce cas, le décollage de la couche de transfert peut également abîmer les données imprimées de sorte que les données sont illisibles après décollage de la couche de transfert. Lorsque la couche d'identification est abîmée, l'étiquette RFID doit être remplacée. Le document EP 1845 413 décrtit une étiquette RFID adhésive ayant plusieurs couches.

Un but de la présente invention est de remédier aux inconvénients précités.

Un autre but de l'invention est de proposer une étiquette d'identification RFID adhésive plus robuste.

Le but de l'invention est de proposer une matrice d'étiquettes RFID adhésives plus pratique à disposer sur un ensemble d'objets à identifier, selon la revendication 1.

La couche de protection permet de protéger la couche d'identification d'éventuels dommages que peut causer le décollage de la couche de transfert lors de la dépose de la couche d'identification sur l'objet à identifier.

Ainsi, l'étiquette selon l'invention est pus robuste que les étiquettes RFID adhésives de l'état de la technique.

Par ailleurs, la couche de protection permet de réaliser une séparation plus pratique des couches de transfert et d'identification.

Selon La revendication 6, la couche d'identification peut comprendre une première sous-couche, dite RFID, sur laquelle sont disposées l'antenne et la puce, du côté de la face de collage. La puce est couplée avec l'antenne. Par ailleurs, étant disposée du côté de la face de collage, la puce est protégée contre un arrachement accidentel lorsque la couche d'identification est disposée sur l'objet à identifier.

Selon la revendication 7, la couche d'identification peut en outre comprendre une deuxième sous-couche, dite d'impression, constituant au moins en partie un support d'impression.

La sous-couche d'impression peut être disposée entre la couche de protection et l'antenne, c'est-à-dire entre la sous-couche RFID et la couche de protection.

Ainsi, l'étiquette RFID selon l'invention permet de réaliser à la fois une identification par technologie RFID et une identification optique et/ou visuelle par l'inscription de données relatives à l'objet à identifier. Ainsi, lorsque l'objet à identifier est un produit à consommer, il est possible de déposer par impression sur la couche d'impression, les dates de fabrication et péremption directement sur l'étiquette adhésive. Ainsi, il n'est pas nécessaire de disposer d'un appareil de lecture de l'étiquette RFID dédié pour accéder à ces informations qui seront accessibles directement à tous les utilisateurs et consommateurs.

Selon la revendication 10,
la couche de protection peut être disposée sur la couche d'identification avec un premier agent adhésif, par exemple à base d'acrylique, et
la couche de transfert peut être disposée sur la couche de protection avec un deuxième agent adhésif, par exemple à base d'acrylique ;
ledit premier agent adhésif réalisant une liaison adhésive entre la couche de protection et la couche d'identification plus forte que la liaison adhésive réalisée par ledit deuxième agent adhésif entre la couche de protection et la couche de transfert, de sorte que lorsque ladite couche de transfert est enlevée, ladite couche de protection reste collée à ladite couche d'identification. Une telle différence de pouvoir adhésif entre le premier et le deuxième agents adhésifs peut être obtenu avec un grammage/concentration différent(e) de composant adhésif dans ces agents adhésifs.

Ainsi, lorsque la couche de transfert est décollée après avoir déposé la couche d'identification sur l'objet, la couche de protection reste collée à la couche d'identification et la protège tout au long de son utilisation.

Selon la revendication 11, la couche dorsale peut être disposée sur la couche d'identification avec un troisième agent adhésif, ledit troisième agent adhésif réalisant :
- une liaison adhésive entre ladite couche dorsale et ladite couche d'identification moins forte que la liaison adhésive entre la couche de protection et la couche de transfert, et
- une liaison adhésive, entre ladite couche d'identification et une paroi sur laquelle ladite étiquette est déposée :
   o plus forte que la liaison adhésive entre la couche de protection et la couche de transfert, et
   o moins forte que la liaison adhésive entre la couche de protection et la couche d'identification.

Ainsi, lorsque la couche dorsale est enlevée avant de déposer la couche d'identification sur l'objet, la couche d'identification reste solidaire de la couche de transfert, ce qui facilite la manipulation de l'étiquette RFID. Par ailleurs, une fois que la couche d'identification est collée sur la paroi de l'objet à identifier, il est possible d'enlever la couche de transfert sans décoller la couche d'identification.

Ces différentes caractéristiques permettent de manipuler de manière pratique et simple l'étiquette selon l'invention.

Selon la revendication 12, la couche dorsale peut être réalisée au moins en partie avec un matériau siliconé. Le matériau siliconé facilite le décollage de la couche dorsale et son utilisation permet également d'utiliser un même agent adhésif pour créer une liaison adhésive entre la couche d'identification et une paroi sur laquelle ladite étiquette est déposée plus forte que la liaison adhésive entre la couche dorsale et la couche d'identification, et également plus forte que la liaison adhésive entre la couche de protection et la couche de transfert.

Selon la revendication 13, la couche de protection et la couche d'identification peuvent comprendre une partie transparente. Ainsi, il est possible de déposer l'étiquette RFID sur une paroi comportant des données préalablement imprimées qui resteront visibles au travers de la partie transparente des couches d'identification et de protection. Ces données peuvent par exemple comprendre des données de dates de consommation ou de fabrication.

L'étiquette selon l'invention peut ainsi comporter une partie transparente qui peut être sous la forme d'une fenêtre transparente qui laisse apparaître des données qui sont directement imprimées/présentes sur l'objet ou un emballage sur laquelle l'étiquette est disposée.

Selon la revendication 8, la couche d'impression peut être réalisée en un matériau transparent sur lequel est disposé, en partie, un fond noir d'impression.

Selon la revendication 9, le matériau transparent peut être du polyéthylène.

Selon l'invention, la matrice d'étiquettes comporte une couche de transfert qui est réalisée en une seule pièce pour l'ensemble desdites étiquettes de ladite matrice.

Ainsi, la matrice d'étiquettes comporte une seule couche de transfert pour l'ensemble des étiquettes. Cela permet de réaliser, en une seule fois, la dépose de l'ensemble des étiquettes de la matrice d'étiquettes, ou au moins plusieurs étiquettes faisant partie de la matrice d'étiquettes.

Selon la revendication 2, la couche dorsale peut également être réalisée en une seule pièce pour l'ensemble des étiquettes. Cela permet de décoller, en un seul mouvement, la couche dorsale de l'ensemble des étiquettes et ainsi de pouvoir disposer, en un seul mouvement, l'ensemble des étiquettes sur plusieurs objets préalablement positionnés de manière adéquate.

Selon la revendication 3, la couche de transfert peut comporter des ouvertures, dites de positionnement, réalisant un positionnement de ladite matrice d'étiquettes lors de la dépose des étiquettes RFID. Ces ouvertures permettent de réaliser un positionnement précis de chacune des étiquettes de la matrice d'étiquettes par rapport aux objets sur lesquels ces étiquettes doivent être collées.

Selon la revendication 4, les ouvertures de positionnement peuvent être disposées sur la périphérie de la couche de transfert.

Selon la revendication 5, les ouvertures de positionnement peuvent être disposées sur deux côtés opposés de la couche de transfert.

Par exemple, lorsque les étiquettes sont déposées en utilisant un conformateur, les ouvertures de positionnement permettent un positionnement précis de la matrice d'étiquettes par rapport à ce conformateur.

La matrice d'étiquettes selon l'invention peut être utilisée pour l'identification de boîtes de capsules de café.

D'autres avantages et caractéristiques apparaîtront à l'examen de la description détaillée d'un mode de réalisation nullement limitatif, et des dessins annexés sur lesquels :
- la figure 1 est une représentation schématique selon une vue de coupe d'une étiquette RFID adhésive selon l'invention ;
- la figure 2 est une représentation selon une vue de dessus de l'étiquette de la figure 1 sans les couches de transfert et dorsale ;
- la figure 3 est une représentation une vue de dessus de l'étiquette de la figure 2 posée sur un objet ;
- la figure 4 est une représentation schématique selon une vue de coupe d'une matrice d'étiquettes selon l'invention ; et
- la figure 5 est une représentation selon une vue de dessous de la matrice d'étiquettes de la figure 4 sans la couche dorsale.

Sur les figures et dans la suite de la description, les éléments communs à plusieurs figures conservent la même référence.

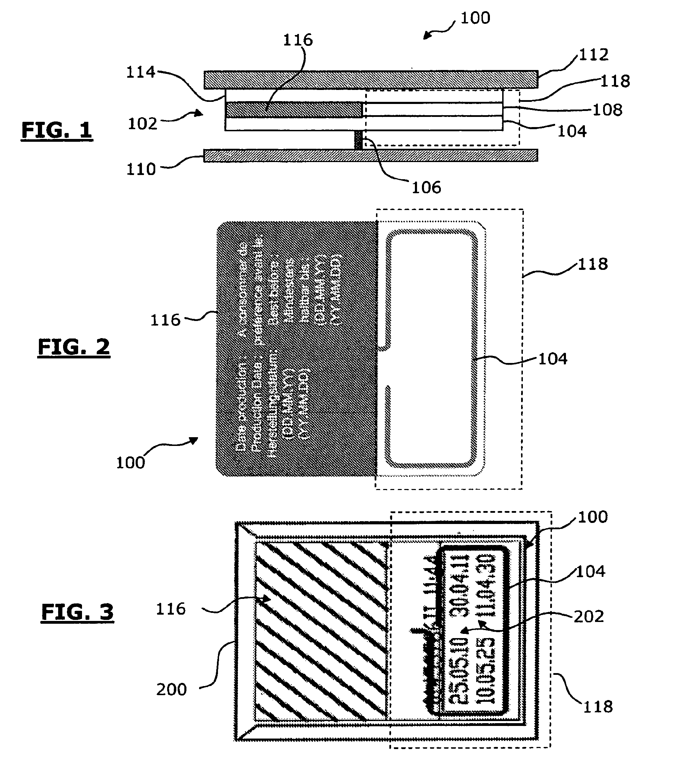

La figure 1 est une représentation schématique selon une vue de coupe d'une étiquette RFID adhésive 100 selon l'invention.

L'étiquette 100 comporte une couche d'identification 102. La couche d'identification comporte une sous-couche RFID composée d'une antenne RFID 104 et d'une puce 106 comprenant des moyens de mémorisation (non représentés) dans lesquels est enregistrée au moins une donnée d'identification. L'antenne RFID 104 et la puce 106 sont agencées de sorte que lorsque la couche d'identification est collée sur un objet à identifier, la puce 106 est placée entre l'antenne 104 et la paroi de l'objet à identifier. Ainsi, la puce 106 est protégée par l'antenne RFID contre un arrachement accidentel, par exemple lors de la manipulation de l'objet.

La couche d'identification 102 comprenden outre, du côté de l'antenne RFID 104, une sous-couche 108 d'impression par encre UV constituant, au moins en partie, un support d'impression de données relatives à l'objet à identifier.

L'étiquette RFID 100 comporteen outre, du côté de la puce 106, une couche dorsale 110 prévue pour être enlevée avant le collage de la couche d'identification 102 sur un objet à identifier.

Du côté opposé à la couche dorsale 110 par rapport à la couche d'identification 102, l'étiquette RFID 100 comporte une couche de transfert 112 facilitant la manipulation de l'étiquette RFID 100 une fois que la couche dorsale 110 est enlevée. Cette couche de transfert 112 est décollée après que la couche d'identification est collée sur l'objet à identifier.

Avantageusement, l'étiquette RFID comporte, entre la couche d'identification 102 et la couche de transfert 112, une couche de protection 114 de la couche d'identification 102. La couche de protection 114 est positionnée plus particulièrement entre la couche de transfert 112 et la sous-couche d'impression 108. Cette couche de protection 114 est prévue pour protéger la couche d'identification 102 contre d'éventuels dommages lors du décollage de la couche de transfert 112. Ainsi, l'antenne RFID 104, la puce 106 et la sous-couche d'impression 108 sont protégées lors du décollage de la couche de transfert.

Dans l'exemple représenté sur la figure 1, la couche de protection 114 est complètement transparente. L'antenne RFID 104 est également déposée sur un support transparent

La sous-couche d'impression 108 est réalisée en une matière transparente. La sous-couche d'impression 108 comporte une partie 116 en fond noir permettant l'impression de données sur cette partie 116.

Ainsi, une fois que la couche dorsale 110 et la couche de transfert 112 sont enlevées, l'ensemble couche d'identification 102 et couche de protection 114 comporte une partie 118 transparente. Cette partie transparente 118 est prévue pour permettre de lire par transparence des données préalablement imprimées directement sur l'objet à identifier.

La figure 2 est une représentation selon une vue de dessus de l'étiquette 100 sans la couche dorsale 110 et sans la couche de transfert 112. La couche de protection 114 étant complètement transparente cette couche n'est pas visible sur la figure 2. Cependant, la sous-couche d'impression 108 est visible avec sa partie 116 en fond noir et imprimée. Ainsi, il est clair sur cette figure 2 que l'ensemble couche d'identification 102 et couche de protection 114 comporte une partie transparente 118.

La figure 3 est une représentation schématique de l'ensemble de la figure 2 une fois déposé sur un objet 200 à identifier.

Des données 202, préalablement déposées sur l'objet 200, sont visibles par transparence au travers de la partie transparente 118. La partie fond noir 116 de la sous-couche d'impression 108 reste également visible et comporte des données (non représentées) inscrites sur l'étiquette RFID 100. Ainsi, l'étiquette selon l'invention permet à la fois d'accéder à des données inscrites sur l'objet à identifier, par exemple des données de type « composition », « date de fabrication » etc., tout en permettant d'associer à l'objet à identifier de nouvelles données, telle que « date de péremption » etc., par l'intermédiaire de la sous-couche d'impression 108. Toutes ces données peuvent être des données lisibles directement par un opérateur et/ou un consommateur sans utiliser un appareil de lecture dédié.

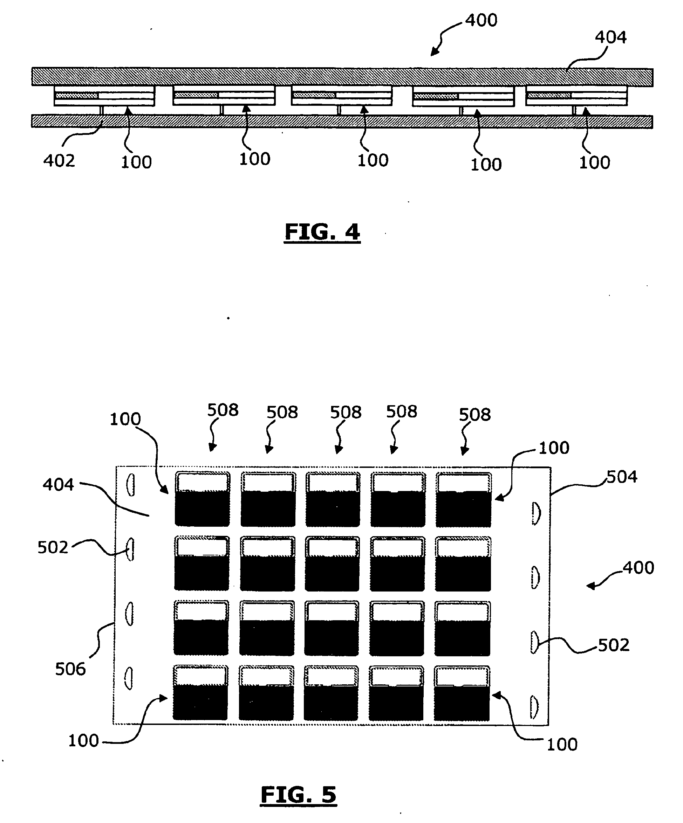

La figure 4 est une représentation schématique selon une vue de coupe d'une matrice 400 d'étiquettes selon l'invention.

La matrice 400 comporte plusieurs étiquettes d'identification RFID adhésives 100, chacune comprenant une couche d'identification, et une couche de protection.

Selon l'invention, la matrice d'étiquettes 400 comporte une couche dorsale 402 unique et commune à toutes les étiquettes 100 de la matrice 400. Toujours selon l'invention, la matrice d'étiquettes 400 comporte une couche de transfert 404 unique et commune à toutes les étiquettes 100 de la matrice 400. Ainsi, la dépose de l'ensemble des étiquettes est facilitée car en un seul geste la couche dorsale 402 peut être enlevée pour l'ensemble des étiquettes de la matrice d'étiquettes 100. De la même manière, en un seul geste la couche de transfert 404 peut être enlevée pour l'ensemble des étiquettes de la matrice d'étiquettes 100 une fois les étiquettes collées sur les objets à identifier préalablement positionnés.

La dépose des étiquettes 100 sur les objets à identifier peut être facilitée encore plus par des moyens de positionnement des étiquettes 100 faisant partie de la matrice 400 d'étiquettes. La figure 5 est une représentation selon une vue de dessous d'une matrice d'étiquettes selon l'invention sans la couche dorsale 402.

Telle que représentée sur la figure 5, la couche de transfert 404 de la matrice 400 d'étiquettes 100 comporte des moyens de positionnement de la matrice d'étiquettes, qui sont dans l'exemple représenté sur la figure 5 des ouvertures de positionnement 502 agencées sur deux côtés opposés 504 et 506 de la couche de transfert 404. Ces ouvertures de positionnement 502 permettent de positionner précisément l'ensemble des cinq rangées 508 d'étiquettes RFID 100, par exemple à l'aide d'un conformateur (non représenté). Dans l'exemple représenté en figure 5, la matrice 400 d'étiquettes comporte donc vingt étiquettes RFID adhésives 100.

Dans les exemples décrits :
- la couche de transfert est réalisée en EUROCEL EV2111, présente une épaisseur de 128µm
- la couche dorsale est réalisée en TT BG40 Brown-S697-BG45 White, présente une épaisseur de 55 µm, et
- la sous-couche d'impression est réalisée en PP MATT TRANSPARENT 60, présente une épaisseur de 57µm, et
- la couche de protection est réalisée en PP MATT TRANSPARENT 20 présente une épaisseur de 20µm.

Par ailleurs, les couches de l'étiquette RFID sont fixées entre elles avec des agents adhésifs de pouvoirs différents. De tels agents adhésifs avec des pouvoirs adhésifs différents peuvent, par exemple, être obtenus à base d'acrylique de grammages/concentration différent(e)s.

Bien entendu l'invention n'est pas limitée aux exemples qui viennent d'être décrits.

## Revendications

1. Matrice (400) d'étiquettes comprenant une pluralité d'étiquettes (100) d'identification RFID, chacune des étiquettes RFID (100) comprenant :
- une couche (102), dite d'identification, prévue pour être déposée sur un objet à identifier, ladite couche d'identification (102) portant au moins une antenne (104) et au moins une puce (106) comprenant des moyens de mémorisation d'une donnée d'identification, ladite couche d'identification (102) comportant une face, dite de collage, destinée à être disposée sur une paroi dudit objet,
- une couche (110), dite dorsale, disposée du côté de la face de collage de ladite couche d'identification (102),
- une couche (404), dite de transfert, disposée du côté opposée à la couche dorsale (110) par rapport à la couche d'identification (102), ladite couche de transfert (112) étant prévue pour transférer ladite couche d'identification (102) sur ledit objet, et
- une couche (114), dite de protection, disposée entre ladite couche d'identification (102) et ladite couche de transfert (112), prévue pour protéger ladite couche d'identification (102) lors du dépôt de ladite étiquette (100) sur ledit objet ;
ladite couche de transfert (404) étant réalisée en une seule pièce pour l'ensemble desdites étiquettes (100).

2. Matrice (400) d'étiquettes selon la revendication 1, **caractérisée en ce que** la couche dorsale (402) est réalisée en une seule pièce pour l'ensemble des étiquettes (100).

3. Matrice (400) d'étiquettes selon l'une quelconque des revendications précédentes, **caractérisée en ce que** la couche de transfert (404) comporte des ouvertures (502), dites de positionnement, réalisant un positionnement de ladite matrice (400) d'étiquettes lors de la dépose des étiquettes (100).

4. Matrice (400) d'étiquettes selon la revendication 3, **caractérisée en ce que** les ouvertures de positionnement (502) sont disposées sur la périphérie de la couche de transfert (404).

5. Matrice (400) d'étiquettes selon l'une quelconque des revendications 3 ou 4, **caractérisée en ce que** les ouvertures de positionnement (502) sont disposées sur deux côtés opposés (504, 506) de la couche de transfert (404).

6. Matrice (400) d'étiquettes selon l'une quelconque des revendications précédentes, **caractérisée en ce que**, pour au moins une étiquette (100), la couche d'identification (102) comprend une première sous-couche, dite RFID, sur laquelle sont disposées l'antenne (104) et la puce (104), du côté de la face de collage.

7. Matrice (400) d'étiquettes selon l'une quelconque des revendications précédentes, **caractérisée en ce que**, pour au moins une étiquette (100), la couche d'identification (102) comprend en outre une deuxième sous-couche (108), dite d'impression, constituant au moins en partie un support d'impression, ladite sous-couche d'impression (108) étant disposée entre la couche de protection (114) et l'antenne (104).

8. Matrice (400) d'étiquettes selon la revendication 7, **caractérisée en ce que** la sous-couche d'impression (108) est réalisée en un matériau transparent sur lequel est disposé, en partie, un fond noir d'impression (116).

9. Matrice (400) selon l'une quelconque des revendications 7 ou 8, **caractérisée en ce que** la sous couche d'impression (108) est réalisée en polyéthylène.

10. Matrice (400) d'étiquettes selon l'une quelconque des revendications précédentes, **caractérisée en ce que**, pour au moins une étiquette (100) :
- la couche de protection (114) est disposée sur la couche d'identification (102) avec un premier agent adhésif, et
- la couche de protection (114) est disposée sur la couche de transfert (112) avec un deuxième agent adhésif ;
ledit premier agent adhésif réalisant une liaison adhésive entre la couche de protection (114) et la couche d'identification (102) plus forte que la liaison adhésive réalisée par ledit deuxième agent adhésif entre la couche de protection (114) et la couche de transfert (112), de sorte que lorsque ladite couche de transfert (112) est enlevée, ladite couche de protection (114) reste collée à ladite couche d'identification (102).

11. Matrice (400) d'étiquettes selon la revendication 10, **caractérisée en ce que**, la couche dorsale (110) est disposée sur la couche d'identification (102) avec un troisième agent adhésif, ledit troisième agent adhésif réalisant :
- une liaison adhésive entre ladite couche dorsale (110) et ladite couche d'identification (102) moins forte que la liaison adhésive entre la couche de protection (114) et la couche de transfert (112), et
- une liaison adhésive, entre ladite couche d'identification (102) et une paroi sur laquelle ladite étiquette (100) est déposée :
o plus forte que la liaison adhésive entre la couche de protection (114) et la couche de transfert (112), et
o moins forte que la liaison adhésive entre la couche de protection (114) et la couche d'identification (112).

12. Matrice (400) d'étiquettes selon l'une quelconque des revendications précédentes, **caractérisée en ce que**, pour au moins une étiquette (100), la couche dorsale (110) est réalisée au moins en partie avec un matériau siliconé.

13. Matrice (400) d'étiquettes selon l'une quelconque des revendications précédentes, **caractérisée en ce que**, pour au moins une étiquette (100), la couche de protection (114) et la couche d'identification (102) comprennent une partie transparente (118).

14. Utilisation de la matrice (400) d'étiquettes selon l'une quelconque des revendications précédentes pour l'identification de boîtes de capsules de café.

## Patentansprüche

1. Etikettenmatrize (400) mit einer Vielzahl von RFID Identifikationsetiketten (100), jedes RFID Etikett (100) umfassend:
- eine so genannte Identifikationsschicht (102), dafür vorgesehen, an einem zu identifizierenden Gegenstand angebracht zu werden, wobei jene Identifikationsschicht (102) mit wenigstens einer Antenne (104) und wenigstens einem Mikrochip (106) mit Einrichtungen zur Speicherung eines Identifikationswerts versehen ist, wobei jene Identifikationsschicht (102) eine so genannte Klebeseite umfasst, welche dazu bestimmt ist, auf einer Wand jenes Gegenstands gelagert zu sein,
- eine so genannte Rückenschicht (110), seitens der Klebeseite dieser Identifikationsschicht (102) gelagert,
- eine so genannte Übertragungsschicht (404), seitens der gegenüber der Identifikationsschicht (102) entgegengesetzten Seite zur Rückenschicht (110) gelagert, wobei jene Übertragungsschicht (112) für die Übertragung jener Identifikationsschicht (102) auf jenen Gegenstand vorgesehen ist, und
- eine so genannte Schutzschicht (114), zwischen jener Identifikationsschicht (102) und jener Übertragungsschicht (112) gelagert, zum Schutz jener Identifikationsschicht (102) beim Anbringen jenes Etiketts (100) an jenem Gegenstand vorgesehen;
wobei jene Übertragungsschicht (404) für jene gesamten Etiketten (100) einstückig ausgebildet ist.

2. Etikettenmatrize (400) nach Anspruch 1, **dadurch gekennzeichnet, dass** die Rückenschicht (402) für die gesamten Etiketten (100) einstückig ausgebildet ist.

3. Etikettenmatrize (400) nach einem der vorhergehenden Ansprüche, **dadurch gekennzeichnet, dass** die Übertragungsschicht (404) so genannte Positionsaussparungen (502) enthält, die eine Positionierung jener Etikettenmatrize (400) beim Anbringen der Etiketten (100) erstellen.

4. Etikettenmatrize (400) nach Anspruch 3, **dadurch gekennzeichnet, dass** die Positionsaussparungen (502) auf der Peripherie der Übertragungsschicht (404) gelagert sind.

5. Etikettenmatrize (400) nach einem der Ansprüche 3 oder 4, **dadurch gekennzeichnet, dass** die Positionsaussparungen (502) auf zwei entgegengesetzten Seiten (504, 506) der Übertragungsschicht (404) angeordnet sind.

6. Etikettenmatrize (400) nach einem der vorhergehenden Ansprüche, **dadurch gekennzeichnet, dass** für mindestens ein Etikett (100) die Identifikationsschicht (102) eine erste, so genannte RFID Grundschicht seitens der Klebeseite umfasst, auf welcher die Antenne (104) und der Mikrochip (106) gelagert sind.

7. Etikettenmatrize (400) nach einem der vorhergehenden Ansprüche, **dadurch gekennzeichnet, dass** für mindestens ein Etikett (100) die Identifikationsschicht (102) außerdem eine zweite, so genannte Druckgrundschicht (108) umfasst, die wenigstens teilweise als Druckträger ausgebildet ist, wobei jene Druckgrundschicht (108) zwischen der Schutzschicht (114) und der Antenne (104) angeordnet ist.

8. Etikettenmatrize (400) nach Anspruch 7, **dadurch gekennzeichnet, dass** die Druckgrundschicht (108) aus einem durchsichtigen Werkstoff besteht, auf welchem zum Teil ein schwarzer Druckhintergrund (116) angeordnet ist.

9. Etikettenmatrize (400) nach einem der Ansprüche 7 oder 8, **dadurch gekennzeichnet, dass** die Druckgrundschicht (108) aus Polyethylen besteht.

10. Etikettenmatrize (400) nach einem der vorhergehenden Ansprüche, **dadurch gekennzeichnet, dass** für wenigstens ein Etikett (100):
- die Schutzschicht (114) auf der Identifikationsschicht (102) mittels eines ersten Klebstoffs gelagert ist, und
- die Schutzschicht (114) auf der Übertragungsschicht (112) mittels eines zweiten Klebstoffs gelagert ist;
wobei jener erste Klebstoff eine Klebeverbindung zwischen der Schutzschicht (114) und der Identifikationsschicht (102) herstellt, die stärker als die durch jenen zweiten Klebstoff zwischen der Schutzschicht (114) und der Übertragungsschicht (112) hergestellte Klebeverbindung ist, sodass beim Abnehmen jener Übertragungsschicht (112) jene Schutzschicht (114) an jener Identifikationsschicht (102) haften bleibt.

11. Etikettenmatrize (400) nach Anspruch 10, **dadurch gekennzeichnet, dass** die Rückenschicht (110) auf der Identifikationsschicht (102) mittels eines dritten Klebstoffs gelagert ist, jener dritte Klebstoff herstellend:
- eine Klebeverbindung zwischen jener Rückenschicht (110) und jener Identifikationsschicht (102), die schwächer als die Klebeverbindung zwischen der Schutzschicht (114) und der Übertragungsschicht (112) ist, und
- eine Klebeverbindung zwischen jener Identifikationsschicht (102) und einer Wand, an welcher jenes Etikett (100) angebracht ist:
o stärker als die Klebeverbindung zwischen der Schutzschicht (114) und der Übertragungsschicht (112), und
o schwächer als die Klebeverbindung zwischen der Schutzschicht (114) und der Identifikationsschicht (112).

12. Etikettenmatrize (400) nach einem der vorhergehenden Ansprüche, **dadurch gekennzeichnet, dass** für wenigstens ein Etikett (100) die Rückenschicht (110) wenigstens teilweise aus einem silikonartigen Werkstoff besteht.

13. Etikettenmatrize (400) nach einem der vorhergehenden Ansprüche, **dadurch gekennzeichnet, dass** für wenigstens ein Etikett (100) die Schutzschicht (114) und die Identifikationsschicht (102) einen durchsichtigen Teil (118) enthalten.

14. Verwendung der Etikettenmatrize (400) nach einem der vorhergehenden Ansprüche für die Identifizierung von Kafeepads-Packungen.

## Claims

1. A matrix (400) of tags comprising a plurality of RFID identification tags (100), each of the RFID tags (100) comprising:
- a so-called identification layer (102), provided to be arranged on an object to be identified, said identification layer (102) bearing at least one antenna (104) and at least one chip (106) comprising means for storing an item of identification data, said identification layer (102) containing a so-called bonding face, intended to be arranged on a wall of said object,
- a so-called backing layer (110), arranged on the side of the bonding face of said identification layer (102),
- a so-called transfer layer (404), arranged on the side opposite to the backing layer (110) with respect to the identification layer (102), said transfer layer (112) being provided for transferring said identification layer (102) onto said object, and
- a so-called protective layer (114), arranged between said identification layer (102) and said transfer layer (112), provided for protecting said identification layer (102) when said tag (100) is arranged on said object;
said transfer layer (404) is produced in a single piece for the set of said tags (100).

2. The matrix (400) of tags according to claim 1, **characterized in that** the backing layer (402) is produced in a single piece for the set of tags (100).

3. The matrix (400) of tags according to any one of the preceding claims, **characterized in that** the transfer layer (404) contains so-called positioning apertures (502), carrying out positioning of said matrix (400) of tags when the tags (100) are put in place.

4. The matrix (400) of tags according to claim 3, **characterized in that** the positioning apertures (502) are arranged on the periphery of the transfer layer (404).

5. The matrix (400) of tags according to any one of claims 3 or 4, **characterized in that** the positioning apertures (502) are arranged on two opposite sides (504, 506) of the transfer layer (404).

6. The matrix (400) of tags according to any one of the preceding claims, **characterized in that**, for at least one tag (100), the identification layer (102) comprises a first so-called RFID under-layer, on which the antenna (104) and the chip (106) are arranged on the side of the bonding face.

7. The matrix (400) of tags according to any one of the preceding claims, **characterized in that**, for at least one tag (100), the identification layer (102) comprises moreover a second so-called print under-layer (108), at least partially constituting a print media, said print under-layer (108) being arranged between the protective layer (114) and the antenna (104).

8. The matrix (400) of tags according to claim 7, **characterized in that** the print under-layer (108) is produced in a transparent material on part of which a black print background (116) is arranged.

9. The matrix (400) according to any one of claims 7 or 8, **characterized in that** the print under-layer (108) is produced in polyethylene.

10. The matrix (400) of tags according to any one of the preceding claims, **characterized in that**, for at least one tag (100):
- the protective layer (114) is arranged on the identification layer (102) with a first adhesive agent, and
- the protective layer (114) is arranged on the transfer layer (112) with a second adhesive agent;
said first adhesive agent producing a stronger adhesive bond between the protective layer (114) and the identification layer (102) than the adhesive bond produced by said second adhesive agent between the protective layer (114) and the transfer layer (112), so that when said transfer layer (112) is removed, said protective layer (114) remains bonded to said identification layer (102).

11. The matrix (400) of tags according to claim 10, **characterized in that**, the backing layer (110) is arranged on the identification layer (102) with a third adhesive agent, said third adhesive agent providing:
- an adhesive bond between said backing layer (110) and said identification layer (102) that is weaker than the adhesive bond between the protective layer (114) and the transfer layer (112), and
- an adhesive bond, between said identification layer (102) and a wall on which said tag (100) is arranged:
o stronger than the adhesive bond between the protective layer (114) and the transfer layer (112), and
o weaker than the adhesive bond between the protective layer (114) and the identification layer (112).

12. The matrix (400) of tags according to any one of the preceding claims, **characterized in that**, for at least one tag (100), the backing layer (110) is produced at least partially with a siliconized material.

13. The matrix (400) of tags according to any one of the preceding claims, **characterized in that**, for at least one tag (100), the protective layer (114) and the identification layer (102) comprise a transparent portion (118).

14. Use of the matrix (400) of tags according to any one of the preceding claims for the identification of boxes of coffee capsules.
